# FASCICULE DE BREVET EUROPEEN

(11) **EP 1 729 568 B1**
(45) Date de publication et mention de la délivrance du brevet: **16.04.2008**
(21) Numéro de dépôt: 05717634.9
(22) Date de dépôt: 15.02.2005
(51) Int. Cl.: A01K 61/00

(54) **PROCEDE D' ELEVAGE AQUACOLE A RECYCLAGE DES ELEMENTS ORGANIQUES ET MINERAUX**
AQUAKULTURVERFAHREN MIT WIEDERVERWERTUNG VON ORGANISCHEN UND MINERALISCHEN ELEMENTEN
AQUACULTURAL FARMING METHOD WITH RECYCLING OF ORGANIC AND MINERAL ELEMENTS

(30) Priorité: 27.02.2004 FR 0401977
(43) Date de publication de la demande: 13.12.2006
(73) Titulaire: Institut de Recherche pour le Développement ( IRD), 75480 Paris Cedex 10 (FR)
(72) Inventeur: GILLES, Sylvain, F-34080 Montpellier Cedex 01 (FR); DRAKIDES, Christian, F-34000 Montpellier (FR)
(74) Mandataire: Grosset-Fournier, Chantal Catherine
(86) Numéro de dépôt international: PCT/FR2005/000347
(87) Numéro de publication internationale: WO 2005/092089

(56) Documents cités:
- DE-A- 2 645 146
- DE-B- 1 607 260
- US-A1- 2002 108 582

## Description

La présente invention est relative à un procédé d'élevage aquacole intensif de poissons phytophages dans une installation réalisant, en circuit fermé ou semi fermé, l'épuration par lagunage des effluents émis par ces poissons, et l'alimentation par les produits de dégradation de ces effluents d'une biomasse de phytoplancton, dont la croissance est en permanence contrôlée grâce à sa consommation régulée par du zooplancton présent dans une zone séparée de celle contenant le phytoplancton et prélevé en quantités déterminées pour être distribué aux poissons en cours d'élevage en qualité d'aliment complémentaire.

On sait que les tendances actuelles de la recherche en aquaculture, en particulier motivées par la constatation inquiétante d'une stagnation des ressources halieutiques mondiales et la nécessité de fournir aux populations de certains pays en voie de développement, notamment en régions tropicales, des ressources alimentaires suffisamment importantes, convergent vers l'élevage d'espèces de poissons qui se révèlent peu exigeantes en protéines animales, notamment dans des installations qui sont conçues pour respecter l'environnement, tout spécialement grâce à l'utilisation de moyens propres à réaliser l'épuration des effluents produits par ces poissons en cours d'élevage et le cas échéant permettre un recyclage au moins partiel de ces effluents.

La demande de brevet des USA, publiée sous le n° 2002/0108582 illustre une installation de ce genre avec des modules tubulaires communicants mais qui ne fonctionnent pas en circuit fermé et surtout ne permet pas une récupération complète des effluents.

On connaît aussi d'autres systèmes aquacoles du même genre, mettant en oeuvre des installations de ce genre, associant une zone d'élevage intensif où les poissons sont placés avec une forte densité, avec une zone d'élevage extensif où leur densité est plus faible, cette dernière jouant le rôle d'épurateur des effluents provenant de la zone intensive, l'eau étant ensuite recyclée en tout ou en partie à travers cette zone.

Avec ces solutions, il est cependant difficile de maîtriser la croissance de la biomasse végétale ou phytoplanctonique qui résulte de la dégradation bactérienne des matières organiques lorsque les rejets en provenance de la zone intensive sont importants, de sorte que le renouvellement de l'eau dans l'installation doit être fréquemment réalisé, ce qui complique la maîtrise du processus d'élevage et grève sensiblement le prix de revient de son exploitation et par suite celui des poissons ainsi obtenus.

Pour améliorer le fonctionnement de telles installations, on a également prévu de prélever en partie le phytoplancton en forte croissance produit dans la zone extensive, ce qui améliore le rendement final mais complique toujours la réalisation de l'installation afin de permettre d'éliminer partiellement la biomasse de phytoplancton, notamment au moyen de filtres ou de dispositifs équivalents. Le brevet US 6 192 833 décrit une telle installation, pour la mise en oeuvre d'un système dit « partitioned aquaculture system » qui nécessite une récolte et l'élimination permanente du phytoplancton produit par des moyens appropriés.

La présente invention est relative à un procédé d'élevage aquacole intensif, qui comporte des améliorations décisives vis-à-vis des solutions antérieures déjà connues, en permettant notamment, à travers une chaîne alimentaire continue, d'utiliser et par suite de valoriser la totalité des rejets organiques des poissons en cours d'élevage avec une production d'une biomasse de phytoplancton couplée à la mise en oeuvre, dans une zone communicante mais distincte, d'une production de zooplancton, propre à réguler la croissance de cette biomasse végétale, ce zooplancton pouvant de plus servir directement d'aliment d'appoint protéiné aux alevins et aux poissons adultes en cours d'élevage.

L'invention concerne également une installation pour la mise en oeuvre de ce procédé, qui peut être alimentée en eau de mer, le cas échéant en eau saumâtre ou même en eau douce, cette installation étant conçue de telle sorte qu'elle puisse être entièrement isolée du milieu naturel extérieur, de sorte que les poissons en cours d'élevage et les poissons sauvages en milieu marin, en dehors de l'installation, soient à l'abri de contaminations réciproques par des agents pathogènes, l'échappement de poissons d'élevage hors de cette installation étant rendu impossible et ne pouvant donc pas affecter l'équilibre de la faune aquatique locale.

L'installation selon l'invention fonctionnant en circuit fermé ou semi fermé sur elle-même, évite par ailleurs toute pollution de l'environnement grâce en particulier au recyclage total des déchets produits.

A cet effet, le procédé considéré, pour l'élevage aquacole en milieu liquide, marin ou constitué d'eau saumâtre ou d'eau douce, en circuit fermé ou semi fermé, de poissons phytophages dont l'alimentation est peu exigeante en protéines animales, à l'intérieur de bacs d'alevinage puis de grossissement, consistant à créer une chaîne alimentaire continue avec récupération totale des effluents organiques produits dans ces bacs pour les traiter dans un ensemble de lagunage du milieu liquide entraîné en circulation continue, comportant un circuit principal formé d'un premier bassin digesteur à fonctionnement aérobie, réalisant la dégradation complète de ces effluents par action d'une flore bactérienne assurant leur décomposition en composants liquides et minéraux, la sortie de ce premier bassin étant de préférence raccordée à un second bassin tampon, contenant une biomasse de phytoplancton dont la population est en croissance continue du fait de l'ingestion des composants de décomposition des effluents, et un circuit secondaire comportant un troisième bassin contenant une biomasse de zooplancton, caractérisé en ce qu'il consiste à contrôler ladite croissance pour maintenir le volume et la densité de la biomasse de phytoplancton sensiblement constante par transfert dans le troisième bassin dans le circuit secondaire de l'excédent de cette biomasse par rapport à une limite fixée, ce troisième bassin étant relié au second, et à ajuster l'alimentation de ce troisième bassin du circuit secondaire avec le phytoplancton du circuit principal afin de maintenir et contrôler sa consommation et son assimilation par le zooplancton, le surplus de celui-ci, au delà d'un seuil d'équilibre ajusté en permanence, étant prélevé et renvoyé dans les bacs d'alevinage et de grossissement pour constituer un aliment d'appoint des poissons contenus dans ces bacs.

Selon une autre caractéristique du procédé selon l'invention, on prélève le surplus de la biomasse de zooplancton pour la renvoyer dans les bacs d'alevinage et de grossissement en continu ou par fractions distinctes, séparées dans le temps.

Selon une autre caractéristique, on soumet le milieu liquide contenu dans le premier bassin digesteur et de préférence également dans le second bassin tampon du circuit principal, à une agitation permanente pour éviter la décantation et la sédimentation, respectivement des effluents au cours de la dégradation bactérienne et du phytoplancton en suspension.

Dans un premier mode de réalisation, on réalise l'agitation permanente du milieu liquide dans le premier bassin digesteur et dans le second bassin tampon du circuit principal en introduisant dans ceux-ci des poissons coprophages et en disposant un filtre à la sortie de ce circuit pour éviter toute introduction de ces poissons coprophages dans le troisième bassin du circuit secondaire et colonisation par ceux-ci de la biomasse de zooplancton contenue dans celui-ci.

Dans un autre mode d'exécution, on réalise l'agitation permanente par une dispersion de bulles d'air à partir du fond des bassins.

On peut également introduire des poissons coprophages seulement dans le premier bassin digesteur et réaliser différemment l'agitation du milieu liquide dans le second bassin, notamment par dispersion de bulles d'air.

Selon une autre caractéristique, on oxygène la biomasse de phytoplancton dans le circuit principal par introduction et dissolution d'air en période nocturne et par photosynthèse naturelle en période diurne.

Avantageusement et selon une caractéristique importante de l'invention, on recycle le milieu liquide dans l'ensemble de lagunage et les bacs d'alevinage et de grossissement au moyen d'au moins une pompe, le prélevant dans un ou plusieurs des trois bassins, séparément ou simultanément.

De préférence, on aménage la communication entre le second et le troisième bassin de l'ensemble de lagunage au moyen d'un déversoir pour éviter la remontée du zooplancton vers la biomasse de phytoplancton et la contamination de celle-ci. En outre, on ajuste le rapport entre le volume du milieu liquide dans les bacs d'alevinage et de grossissement et celui des trois bassins de l'ensemble de lagunage à une valeur au moins égale à 6.

Selon encore une autre caractéristique du procédé considéré, on contrôle en permanence et au choix, dans les bacs et dans les bassins de l'ensemble de lagunage la température, le pH et la salinité du milieu, ainsi que les concentrations en ammoniaque, nitrates et nitrites.

De préférence également, on peut fertiliser la biomasse de phytoplancton si le volume de celle-ci devient inférieur à la limite fixée, pour accélérer sa croissance.

Dans tous les cas, on contrôle en permanence la concentration de la biomasse de phytoplancton par comptage des cellules algales, par usage d'un disque de Secchi ou par mesure de la concentration chlorophyllienne du milieu.

L'invention concerne également une installation d'élevage aquacole pour la mise en oeuvre du procédé considéré, qui se caractérise en ce qu'elle comporte une pluralité de bacs d'alevinage et de grossissement des poissons phytophages, un ensemble de lagunage constitué de trois bassins en série communicants pour la circulation contrôlée du milieu liquide, et une pompe de recyclage pour le renvoi d'une fraction ajustée de ce milieu prélevée dans au moins un des trois bassins vers les bacs d'alevinage et de grossissement.

Selon une autre caractéristique de cette installation, les communications entre le premier et le second bassin, et/ou le second et le troisième bassin, comportent un filtre ; la communication entre le second et le troisième bassin comporte en outre un déversoir.

Avantageusement, le troisième bassin de l'ensemble de lagunage comporte également un filtre permettant le pompage du milieu sans prélever le zooplancton pour augmenter la biomasse du phytoplancton et un dispositif de prélèvement du zooplancton pour diminuer cette biomasse, selon le cas.

D'autres caractéristiques du procédé selon l'invention et de l'installation pour la mise en oeuvre de celui-ci, apparaîtront encore à travers la description qui suit d'un exemple de réalisation, donné à titre indicatif et non limitatif, en référence au dessin annexé, sur lequel :
- La Figure 1 est un schéma de principe de l'installation considérée, illustrant les divers bacs et bassins de celle-ci et leurs liaisons mutuelles.
- La Figure 2 représente une variante de l'installation selon la Figure 1.

Dans ce qui suit, on suppose que le procédé et l'installation en cause sont de préférence mis en oeuvre mais de façon non exclusive pour l'élevage intensif de poissons phytophages, notamment tels que des tilapias, notamment du type Sarotherodon melanotheron heudelotii, espèce que l'on rencontre largement dans certaines zones côtières en régions tropicales et qui se révèlent présenter d'excellentes aptitudes de croissance sans nécessiter pour leur alimentation des quantités élevées de protéines animales.

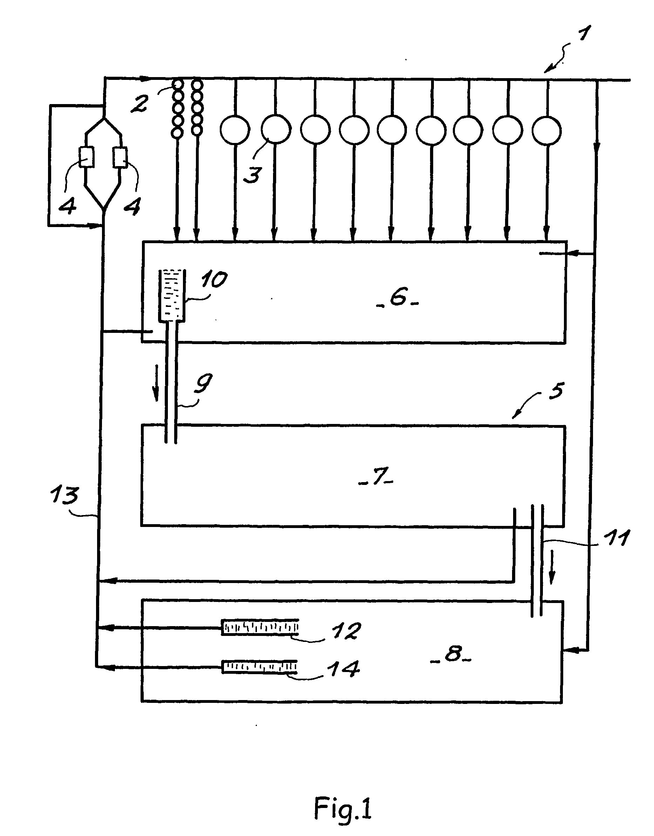

Sur la Figure 1, la référence 1 désigne dans son ensemble une telle installation d'élevage intensif de tilapias, comportant une pluralité de bacs 2 en série réservés à la croissance des alevins, ces bacs étant disposés à proximité d'un groupe d'autres bacs 3 où s'effectue le grossissement des poissons adultes, après transfert contrôlé des alevins dans ces bacs lorsqu'ils ont atteint une taille suffisante.

Dans un mode de réalisation effectif de l'installation, on utilise de préférence environ dix bacs d'alevinage dont le volume unitaire est de l'ordre de 50 litres et neuf bacs de grossissement dont le volume est de l'ordre de 1.500 litres pour chacun d'eux, ces divers bacs représentant ensemble un volume total d'environ 14 m3.

Ces bacs sont remplis d'un milieu liquide, constitué selon le cas d'eau de mer, d'eau saumâtre, voire même d'eau douce prélevée à partir de la nappe phréatique, laquelle est facilement accessible en zone côtière, notamment lorsque celle-ci comporte un sol sablonneux.

Le milieu liquide est mis en circulation continue et recyclé en permanence dans l'installation au moyen de deux pompes 4, lui permettant notamment, à la sortie des bassins 2 et 3, de s'écouler dans un ensemble de lagunage 5, comprenant un premier bassin digesteur 6, suivi de préférence de deux autres bassins, respectivement 7 et 8, dont le rôle sera précisé ci-après, ces trois bassins 6, 7 et 8, étant montés en série l'un à la suite de l'autre selon la direction de l'écoulement, le milieu étant renvoyé à la sortie de cet ensemble de lagunage 5 aux bacs d'alevinage 2 et de grossissement 3. Les deux bassins 6 et 7 forment un circuit principal et le troisième bassin 8 un circuit secondaire.

Le second bassin 7, qui constitue un bassin tampon, contient une biomasse végétale de phytoplancton, tandis que le troisième bassin 8 est occupé par une biomasse animale de zooplancton.

De préférence, les deux pompes 4 de l'installation fonctionnent en alternance, leur débit étant de l'ordre de 24 m3/h pour assurer un renouvellement du milieu dans l'installation voisin de 200 %/h.

Dans l'exemple considéré, les trois bassins de l'ensemble de lagunage 5 présentent des dimensions sensiblement égales de l'un à l'autre, de l'ordre de 16 m sur 4,5 m en longueur et largeur pour une profondeur d'environ 50 cm, ces dimensions n'ayant bien entendu aucun caractère impératif.

Dans l'exemple non limitatif considéré, le volume total des trois bassins 6, 7 et 8 représente ainsi un peu plus de 110 m3, soit environ huit fois celui des bacs d'alevinage et de grossissement 2 et 3 réunis. En tout état de cause, l'expérience montre que le rapport de ces volumes doit être au moins égal à six.

La liaison entre le bassin digesteur 6 et le premier bassin tampon 7 dans l'ensemble de lagunage 5 est assurée par une canalisation 9, de diamètre approprié pour permettre un écoulement convenable du milieu de l'un vers l'autre, cette canalisation présentant de préférence un diamètre de 140 mm.

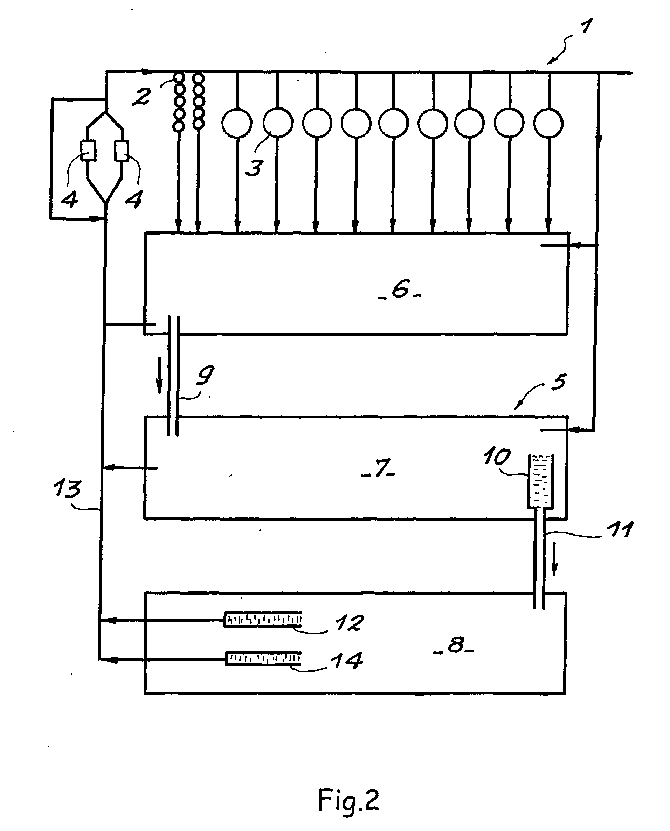

Dans le bassin digesteur 6, la canalisation 9 est munie d'un filtre 10, à fines mailles, de l'ordre de 1 mm. Une disposition semblable, avec un filtre 10 analogue, comme représenté sur la Figure 2, est également prévue entre le second bassin tampon 7 et le troisième bassin 8 du circuit secondaire pour les raisons précisées plus loin.

La liaison entre les deux bassins tampons 7 et 8 est assurée par une canalisation 11, de préférence munie comme dit ci-dessus d'un filtre analogue au filtre 10 monté sur la canalisation 9, cette canalisation 11 étant de plus associée à un déversoir (non représenté), celui-ci étant aménagé de telle sorte que l'écoulement du milieu ne puisse se produire que du bassin 7 vers le bassin 8 en aval et non vers l'amont en sens inverse.

Le milieu en écoulement dans le bassin 8 traverse le cas échéant un filtre 12 à mailles très réduites, microscopiques, de l'ordre de 150 microns, l'eau à la sortie de ce bassin étant renvoyée par une conduite 13 vers les pompes 4 et de là vers les bassins d'alevinage et de grossissement 2 et 3.

Une vanne (non représentée), montée sur la conduite 13, peut aussi permettre de contrôler le débit d'eau qui transite dans l'installation, en particulier à la sortie du bassin 8.

Ce bassin 8 comporte par ailleurs un dispositif 14 de prélèvement du milieu contenu dans ce bassin, notamment du zooplancton, dont le détail de la réalisation n'importe pas directement à l'invention, ce dispositif du genre filtre, épuisette, écope ou similaire, à fonctionnement automatique ou semi-automatique, étant adapté à retirer, en continu ou en discontinu, une fraction de ce milieu, selon les modalités précisées ci-après.

Le procédé de l'invention est mis en oeuvre dans l'installation ainsi décrite de la façon suivante :

Les alevins et les poissons en cours de grossissement, contenus dans les bacs 2 et 3, alimentés au moins pour partie par un aliment de synthèse approprié, tel que des granulés ou analogues, produisent une certaine quantité d'effluents organiques ou fèces, qui sont entraînés en circulation continue depuis ces bacs vers le bassin digesteur 6 de l'ensemble de lagunage 5.

Dans ce bassin 6, se produit, par action sur la matière organique de ces effluents d'une flore bactérienne appropriée de composition classique et qui n'importe pas en tant que telle à l'invention, une dégradation de ceux-ci par liquéfaction et/ou minéralisation, cette dégradation étant de préférence effectuée en milieu fermé aérobie afin d'éviter la formation d'hydrogène sulfuré (H²S) lorsque le milieu liquide est constitué par de l'eau de mer ou de l'eau saumâtre, ou de méthane (CH⁴) lorsque ce milieu est essentiellement formé d'eau douce.

Au cours de cette opération, il est particulièrement nécessaire d'éviter la décantation et la sédimentation des matières en suspension à l'intérieur du bassin digesteur 6 et également du bassin tampon 7 en ce qui concerne le phytoplancton qui y est contenu, notamment pour que dans le premier cas, la dégradation des matières organiques soit la plus complète et la plus efficace possible, et que dans le second, les algues ou similaires du phytoplancton restent en suspension.

A cet effet et selon une caractéristique avantageuse de l'invention, on peut prévoir de stocker à l'intérieur de ce bassin 6 une certaine quantité de poissons coprophages, détritivores, par exemple quelques tilapias, avec une densité d'environ dix individus par m3, qui ne sont pas alimentés autrement que par une fraction des matières organiques en suspension dans le milieu, l'intérêt résidant dans le fait que ces poissons, par les mouvements désordonnés qu'ils induisent dans l'eau, mettent les sédiments en permanente suspension.

Le filtre 10 permet d'éviter la colonisation du bassin suivant 7 par les poissons coprophages contenus ce premier bassin 6. Toutefois et de manière également avantageuse, des dispositions analogues peuvent être prévues pour ce bassin 7, comme illustré sur la variante de la Figure 2, avec mise en place dans celui-ci de semblables poissons détritivores, qui évitent par le brassage du milieu liquide qu'ils provoquent dans ce bassin, la sédimentation des algues mortes ou autres organismes qui forment la biomasse de phytoplancton dans ce bassin.

Dans ce cas, la canalisation 11 de sortie du bassin 7, assurant la liaison avec le bassin 8 du circuit secondaire contenant le zooplancton, est aussi équipée d'un filtre 10, comme représenté dans cette variante, ces filtres 10 successifs entre les bassins 6, 7 et 8 n'empêchant pas la,circulation du phytoplancton dans l'installation mais évitant soigneusement que les poissons coprophages, qui consomment un peu seulement de ce phytoplancton, ne viennent jusque dans le troisième bassin 8 contenant le zooplancton et ne se nourrissent principalement de celui-ci, en quantité préjudiciable à l'équilibre recherché par le procédé de l'invention.

En variante, pour assurer l'agitation permanente des milieux contenus dans les bassins 6 et 7, on peut également prévoir de placer au voisinage du fond de ces bassins, une rampe ou analogue (non représentée sur le schéma), permettant de diffusent au sein du milieu liquide des bulles d'air en grande quantité, qui l'agitent et dispersent les sédiments dans celui-ci.

On peut également prévoir des poissons coprophages dans le premier bassin digesteur 6 et une agitation par bulles d'air dans le second bassin tampon 7, auquel cas le filtre 10 à monter sur la canalisation 11 qui relie ce bassin 7 au bassin aval 8 n'est plus nécessaire, les poissons coprophages étant maintenus dans le bassin 6 grâce au seul filtre 10 monté sur la canalisation 9 qui les empêche de venir dans cette variante dans le bassin 7.

A noter que la solution avec injection de bulles d'air, provoque la dissolution une partie de l'air injecté dans le milieu liquide au sein du bassin digesteur 6 et permet d'oxygéner convenablement ce milieu, de même que, en aval dans le bassin 7 contenant le phytoplancton, d'accélérer le cas échéant la croissance de celui-ci dans des proportions appropriées.

Avantageusement cependant, cette oxygénation du milieu liquide par l'air dissous, n'est de préférence mise en service que la nuit afin de faciliter au cours de celle-ci l'activité bactérienne assurant la dégradation des matières organiques dans le bassin digesteur, la croissance de la biomasse végétale de phytoplancton dans le bassin 7 suivant de l'ensemble de lagunage étant essentiellement due, en période diurne, à l'effet de la photosynthèse naturelle.

Dans l'exemple plus spécialement considéré, qui n'a évidemment aucun caractère limitatif, on a constaté que pour une concentration dans les bacs 2 et 3 de cent poissons de 300 g environ par m3, avec un taux d'alimentation de 2,5 % par jour, soit une distribution de 10 kg, le taux des matières organiques en suspension dans le milieu à la sortie de ces bacs est voisine de 3 kg.

Pour une telle quantité, la consommation d'oxygène nécessaire est de l'ordre de 2,5 kg/jour, qui peut être obtenue à l'aide d'une soufflante (non représentée), délivrant environ 12 m3/h d'air. Des systèmes d'aération complémentaires, par effet Venturi ou analogue, peuvent aussi être placés sur les canalisations d'alimentation des bacs de grossissement avec le milieu liquide.

Le niveau d'oxygène dissous est de préférence maintenu égal à 3 mg/l, soit 50% de saturation au lever du jour, l'excédent de gaz carbonique étant éliminé par dégazage pour éviter les risques d'acidose des poissons. Il en va de même pour l'excédent d'oxygène lié à la photosynthèse durant la journée, correspondant à un taux de saturation de 250%.

La température est par ailleurs maintenue aussi constante que possible, de l'ordre de 30 à 36°C selon les saisons et les périodes du jour ou de la nuit, soit à une valeur favorable à une croissance optimale des poissons en élevage.

Selon l'invention, le second bassin 7 de l'ensemble de lagunage 5 qui reçoit les produits de dégradation des matières organiques obtenus dans le bassin digesteur 6, contient une masse de phytoplancton qui a pour rôle essentiel d'épurer et d'oxygéner le milieu liquide reçu dans ce bassin 7 et circulant dans ce dernier, l'alimentation de ce bassin produisant une croissance continue des algues et autres éléments végétaux qui constituent ce phytoplancton, la température étant en outre mesurée en permanence et fixée à une valeur choisie propre à assurer en toutes saisons un maintien convenable de cette croissance.

Avantageusement, la biomasse de phytoplancton dans le bassin 7 est ensemencée naturellement par des algues planctoniques du genre Chlorella.

On mesure et contrôle également de façon continue la salinité du milieu liquide, de préférence ajustée autour de 20 mg/l et son pH, afin de maintenir aussi constantes que possible les conditions d'élevage des poissons dans les bacs 2 et 3.

On conçoit néanmoins qu'en l'absence de toute régulation, la quantité de phytoplancton dans le bassin 7 va rapidement dépasser un seuil prédéterminé, au-delà duquel l'installation devient inutilisable, à la fois en raison de sa densité trop importante et également de son vieillissement.

Pour éviter cet inconvénient, le procédé selon l'invention, consiste à introduire dans le troisième bassin 8, en aval du précédent et qui reçoit le milieu liquide ainsi chargé de phytoplancton, une biomasse animale de zooplancton dont les caractéristiques sont choisies de telle sorte que sa propre croissance soit réalisée dans des conditions exactement déterminées par absorption et digestion du phytoplancton en excès provenant du bassin précédent.

Le déversoir, monté sur la canalisation de liaison 11, évite l'infestation du bassin 7 par le zooplancton du bassin 8, qui ne peut remonter dans le précédent. Par ailleurs, le bassin 8 est préservé de toute introduction dans celui-ci des poissons coprophages contenus dans les bassins 6 et 7 pour réaliser l'agitation permanente de leurs milieux respectifs comme indiqué précédemment, au moyen des filtres montés sur leurs conduites de communication.

La concentration du zooplancton dans le bassin 8 empêche ainsi le phytoplancton dans le bassin 7 de dépasser le seuil d'équilibre grâce à une consommation contrôlée de ce phytoplancton par le zooplancton, en particulier ajustée afin d'atteindre et maintenir un équilibre entre ces concentrations satisfaisant pour la bonne marche de l'installation, en évitant à l'inverse un épuisement trop important du phytoplancton en dessous d'un seuil donné, exigeant le cas échéant d'accélérer à nouveau sa croissance par une fertilisation additionnelle du milieu liquide dans le bassin 7.

Dans ce but, on contrôle la population zooplanctonique dans le bassin 8 en effectuant, de façon préférentiellement permanente mais éventuellement de façon séquentielle, soit un prélèvement du milieu liquide à travers le filtre 12 à mailles microscopiques s'il convient d'augmenter cette population qui ne peut franchir ce filtre, soit un prélèvement du zooplancton lui-même en quantités déterminées, au moyen du dispositif 14 dans le cas où il importe de diminuer cette population.

Dans le second cas, le zooplancton prélevé est renvoyé dans les bacs d'alevinage et de grossissement 2 et 3 afin d'assurer un complément d'alimentation des poissons contenus dans ces bacs, qui accroît très sensiblement l'économie du système, qui peut atteindré une proportion d'environ 2/3 par rapport à une installation classique.

Le cas échéant, si la prolificité du zooplancton est très élevée, notamment avec du zooplancton constitué d'espèces du type rotifère, à reproduction et croissance rapides, de même que si les dimensions du bassin sont suffisamment grandes et lé temps de résidence assez long, le taux de consommation du phytoplancton peut être tel qu'il s'autorégule et qu 'il n'est même plus nécessaire d'avoir recours au filtre 12 et au dispositif de prélèvement 14 contrôlant et agissant sur la concentration du zooplancton dans ce bassin.

Le procédé selon l'invention permet donc un recyclage intégral des effluents provenant des poissons en cours d'élevage, grâce à une gestion permanente et modulable des biomasses de phytoplancton produit dans le circuit principal et de zooplancton présent dans le circuit secondaire, dans les deux derniers bacs de l'ensemble de lagunage.

L'installation peut par ailleurs être gérée de façon discontinue ou continue, en fonction de l'importance des lots de poissons prélevés au cours du temps dans les bacs de grossissement et de la masse d'effluents à traiter par le procédé de l'invention.

Dans le premier cas, la concentration de la biomasse de phytoplancton est contrôlée de manière à rester supérieure à une valeur fixée pour un nombre donné de poissons en élevage (mais inférieure à celle qui conduit à l'équilibre induit par l'action sur cette biomasse du zooplancton comme exposé précédemment), établie au vu des concentrations des produits de dégradation des effluents organiques en ammoniaque, nitrites et nitrates.

Ces concentrations dans la biomasse de phytoplancton peuvent être mesurées de façon classique, soit à l'aide d'un disque de Secchi, soit par détermination de la concentration chlorophyllienne, soit encore par comptage des cellules algales au sein de cette biomasse.

Lorsque la concentration en phytoplancton atteint le seuil prévu, on prélève une quantité convenable de la population de zooplancton afin de permettre une reprise de la croissance de la biomasse dans le bassin 7 et ainsi de suite par phases successives de croissance et de réduction.

Si on souhaite procéder de façon continue, on prélève journellement une quantité donnée de zooplancton afin de maintenir la biomasse de phytoplancton à une valeur sensiblement constante pour l'épuration du milieu liquide, en établissant une relation entre les quantités de poissons dans les bacs d'alevinage et de grossissement 2 et 3, et la concentration du phytoplancton dans le bassin 7, au vu des valeurs mesurées en ammoniaque, nitrites et nitrates, le maintien de cette concentration étant assuré par prélèvement journalier de zooplancton dans le bassin 8.

L'invention propose donc un procédé d'élevage aquacole, en milieu marin ou en eau saumâtre ou même en eau douce, qui est mis en oeuvre circuit fermé ou semi fermé, donc sans aucune incidence sur l'environnement, simple à exploiter et particulièrement bien adapté à des poissons peu exigeant en protéines animales pour leur alimentation, ce procédé permettant de valoriser par lagunage la totalité des effluents et rejets organiques de ces poissons grâce à une production contrôlée de phytoplancton et de zooplancton, une partie de ce dernier pouvant servir d'aliment d'appoint. Du fait de son fonctionnement en circuit fermé ou semi fermé, l'installation envisagée permet de réaliser une économie d'eau considérable, de l'ordre de 90%, particulièrement appréciable dans des pays tropicaux où les ressources sont éventuellement rares, le seul complément d'appoint nécessaire correspondant pratiquement à la compensation des pertes par évaporation vers l'extérieur.

En outre, par suite de l'économie réalisée en aliment pour les poissons en cours d'élevage, grâce à la consommation par ceux-ci du zooplancton en excès, le cycle nécessaire est sensiblement raccourci. De plus la mise en oeuvre du procédé ne requiert pas un personnel qualifié, ce qui est également une source d'économie et de bonne adaptation aux conditions généralement rencontrées dans des régions moins développées économiquement où les besoins en nourriture sont en revanche plus importants.

Avantageusement, l'installation peut, sans coût additionnel majeur, être placée sous serre ou ensemble de protection similaire, pour maintenir une température ambiante sensiblement constante et éviter par ailleurs des variations préjudiciables de la salinité du milieu en cas de pluies. Des filets de protection contre les oiseaux peuvent aussi être prévus au dessus des bassins de l'installation.

Par ailleurs, du fait du complet isolement de celle-ci vis-à-vis du milieu extérieur, aucune pollution ou contamination des poissons en élevage par de poissons sauvages ou vice versa du fait d'agents pathogènes n'est à craindre.

Bien entendu, il va de soi que l'invention ne se limite pas à l'exemple de mise en oeuvre plus spécialement décrit en référence à l'installation conforme au schéma annexé ; elle en embrasse au contraire toutes les variantes.

En particulier, on peut modifier, sans sortir du cadre du procédé selon l'invention, l'agencement relatif des liaisons et des conduits de circulation entre les divers bassins comme illustré sur les deux variantes des Figure 1 et Figure 2 respectivement, notamment en ce qui concerne l'alimentation en liquide des bassins 7 et 8 et le retour par la canalisation 13 vers les bassins d'alevinage et de grossissement 2 et 3.

## Revendications

1. - Procédé pour l'élevage aquacole en milieu liquide, marin ou constitué d'eau saumâtre ou d'eau douce, en circuit fermé ou semi fermé, de poissons phytophages dont l'alimentation est peu exigeante en protéines animales, à l'intérieur de bacs d'alevinage (2) puis de grossissement (3), consistant à créer une chaîne alimentaire continue avec récupération totale des effluents organiques produits dans ces bacs pour les traiter dans un ensemble de lagunage (5) du milieu liquide entraîné en circulation continue, comportant un circuit principal formé d'un premier bassin digesteur (6) à fonctionnement aérobie, réalisant la dégradation complète de ces effluents par action d'une flore bactérienne assurant leur décomposition en composants liquides et minéraux, la sortie de ce premier bassin étant de préférence raccordée à un second bassin tampon (7), contenant une biomasse de phytoplancton dont la population est en croissance continue du fait de l'ingestion des composants de décomposition des effluents, et un circuit secondaire comportant un troisième bassin (8) contenant une biomasse de zooplancton, **caractérisé en ce qu'**il consiste à contrôler ladite croissance pour maintenir le volume et la densité de la biomasse de phytoplancton dans le circuit principal sensiblement constante par transfert dans le troisième bassin (8) dans le circuit secondaire de l'excédent de cette biomasse par rapport à une limite fixée, ce troisième bassin étant relié au second, et à ajuster l'alimentation de ce troisième bassin avec le phytoplancton du circuit principal afin de maintenir et contrôler sa consommation et son assimilation par le zooplancton, le surplus de celui-ci, au delà d'un seuil d'équilibre ajusté en permanence, étant prélevé et renvoyé dans les bacs d'alevinage et de grossissement pour constituer un aliment d'appoint des poissons contenus dans ces bacs.

2. - Procédé selon la revendication 1, **caractérisé en ce qu'**on prélève le surplus de la biomasse de zooplancton pour la renvoyer dans les bacs d'alevinage (2) et de grossissement (3) en continu ou par fractions distinctes, séparées dans le temps.

3. - Procédé selon l'une des revendications 1 ou 2, **caractérisé en ce** on soumet le milieu liquide contenu dans le premier bassin digesteur (6) et de préférence également dans le second bassin tampon (7) du circuit principal à une agitation permanente pour éviter la décantation et la sédimentation, respectivement des effluents au cours de la dégradation bactérienne et du phytoplancton en suspension.

4. - Procédé selon la revendication 3, **caractérisé en ce qu'**on réalise l'agitation permanente en introduisant dans le bassin digesteur (6) et/ou le bassin tampon (7) des poissons coprophages.

5. - Procédé selon la revendication 4, **caractérisé en ce qu'**on dispose un filtre (10) à la sortie du premier bassin (6) et du second bassin (7) pour éviter toute introduction de ces poissons coprophages dans le troisième bassin (8) et colonisation par ceux-ci de la biomasse de zooplancton contenue dans ce bassin.

6. - Procédé selon la revendication 3, **caractérisé en ce qu'**on réalise l'agitation permanente par une dispersion de bulles d'air à partir du fond des bassins (6 et/ou 7).

7. - Procédé selon l'une quelconque des revendications 1 à 6, **caractérisé en ce qu'**on oxygène la biomasse de phytoplancton dans le second bassin (7) par introduction et dissolution d'air en période nocturne et par photosynthèse naturelle en période diurne.

8. - Procédé selon l'une quelconque des revendications 1 à 7, **caractérisé en ce qu'**on recycle le milieu liquide dans l'ensemble de lagunage (5) et les bacs d'alevinage (2) et de grossissement (3) au moyen d'au moins une pompe (4) le prélevant dans un ou plusieurs des trois bassins, séparément ou simultanément.

9. - Procédé selon l'une quelconque des revendications 1 à 8, **caractérisé en ce qu'**on aménage la communication entre le second (7) et le troisième (8) bassins de l'ensemble de lagunage (5) au moyen d'un déversoir pour éviter la remontée du zooplancton vers la biomasse de phytoplancton et la contamination de celle-ci.

10. - Procédé selon l'une quelconque des revendications 1 à 9, **caractérisé en ce qu'**on ajuste le rapport entre le volume en eau dans les bacs d'alevinage (2) et de grossissement (3) et celui des trois bassins de l'ensemble de lagunage (5) à une valeur au moins égale à 6.

11. - Procédé selon l'une quelconque des revendications 1 à 10, **caractérisé en ce qu'**on contrôle en permanence et au choix dans les bacs (2,3) et dans les bassins de l'ensemble de lagunage (5) la température, le pH et la salinité du milieu, ainsi que les concentrations en ammoniaque, nitrates et nitrites.

12. - Procédé selon l'une quelconque des revendications 1 à 11, **caractérisé en ce qu'**on fertilise la biomasse de phytoplancton si le volume de celle-ci devient inférieur à la limite fixée, pour accélérer sa croissance.

13. - Procédé selon l'une quelconque des revendications 1 à 12, **caractérisé en ce qu'**on contrôle également la concentration de la biomasse de phytoplancton par comptage des cellules algales, par usage d'un disque de Secchi ou par mesure de la concentration chlorophyllienne du milieu.

14. - Application du procédé selon l'une quelconque des revendications 1 à 13, **caractérisée en ce que** les poissons introduits dans les bacs d'alevinage (2) et de grossissement (3) sont de préférence des tilapias notamment de l'espèce Sarotherodon melanotheron heudelotii.

15. - Installation d'élevage aquacole pour la mise en oeuvre du procédé selon l'une quelconque des revendications 1 à 13, **caractérisée en ce qu'**elle comporte une pluralité de bacs d'alevinage (2) et de grossissement (3) des poissons phytophages, un ensemble de lagunage (5) constitué d'au moins deux et de préférence trois bassins (6,7,8) en série communicants pour la circulation contrôlée du milieu liquide d'élevage, et au moins une pompe (4) de recyclage pour le renvoi d'une fraction ajustée de ce milieu prélevée dans au moins un des trois bassins vers les bacs d'alevinage et de grossissement.

16. - Installation selon la revendication 15, **caractérisée en ce que** les communications entre le premier bassin (6) et le second bassin (7), et le second bassin (7) et le troisième bassin (8), comportent un filtre (10).

17. - Installation selon la revendication 15, **caractérisée en ce que** la communication entre le second et le troisième bassin comporte un déversoir.

18. - Installation selon la revendication 15, **caractérisée en ce que** le troisième bassin (8) de l'ensemble de lagunage (5) comporte éventuellement un filtre (12) permettant le pompage du milieu liquide sans prélever le zooplancton pour augmenter la biomasse et un dispositif de prélèvement (14) du zooplancton pour diminuer la biomasse, selon le cas.

## Claims

1. - Method for the aquacultural farming in a liquid marine medium, or a medium constituted by brackish water or fresh water, in a closed or semi-closed circuit, of phytophagous fish, the feed of which requires little in the way of animal proteins, inside fry rearing (2) then growth (3) troughs, involving the creation of a continuous food chain with total recovery of the organic effluents produced in these troughs in order to treat them in a lagooning system (5) of the liquid medium which is kept in continuous circulation, comprising a main circuit formed by a first digester tank (6) with aerobic operation, carrying out the complete degradation of these effluents by the action of bacterial flora ensuring their decomposition to liquid and mineral components, the outlet from this first tank being preferably connected to a second buffer tank (7), containing a phytoplankton biomass the population of which is continuously grown due to the ingestion of the decomposition components of the effluents, and a secondary circuit comprising a third tank (8) containing a zooplankton biomass, **characterized in that** it involves controlling said growth in order to maintain the volume and the density of the phytoplankton biomass in the main circuit substantially constant by transfer into the third tank (8) in the secondary circuit of the surplus of this biomass relative to a fixed limit, this third tank being connected to the second, and to adjust the feed of this third tank with the phytoplankton from the main circuit in order to maintain and control its consumption and its assimilation by the zooplankton, the surplus of the latter, above a permanently adjusted equilibrium threshold, being removed and sent to the fry rearing and growth troughs in order to constitute a supplementary food for the fish contained in these troughs.

2. - Method according to claim 1, **characterized in that** the surplus of the zooplankton biomass is removed and sent to the fry rearing (2) and growth (3) troughs continuously or by separate fractions, separated over time.

3. - Method according to one of claims 1 or 2, **characterized in that** the liquid medium contained in the first digester tank (6) and preferably also in the second buffer tank (7) of the main circuit is subjected to continuous agitation in order to prevent settling and sedimentation, of the effluents during the bacterial degradation and of the phytoplankton in suspension respectively.

4. - Method according to claim 3, **characterized in that** the continuous agitation is carried out while introducing coprophagous fish into the digester tank (6) and/or the buffer tank (7).

5. - Method according to claim 4, **characterized in that** a filter (10) is arranged at the outlet from the first tank (6) and the second tank (7) in order to prevent any introduction of these coprophagous fish into the third tank (8) and colonization by the latter of the zooplankton biomass contained in this tank.

6. - Method according to claim 3, **characterized in that** the continuous agitation is carried out by a dispersion of air bubbles from the base of the tanks (6 and/or 7).

7. - Method according to any one of claims 1 to 6, **characterized in that** the phytoplankton biomass in the second tank (7) is oxygenated by the introduction and dissolution of air during the nocturnal period and by natural photosynthesis during the diurnal period.

8. - Method according to any one of claims 1 to 7, **characterized in that** the liquid medium is recycled in the lagooning system (5) and the fry rearing (2) and growth (3) troughs by means of at least one pump (4) removing it from one or more of the three tanks, separately or simultaneously.

9. - Method according to any one of claims 1 to 8, **characterized in that** the connection between the second (7) and the third (8) tanks of the lagooning system (5) is via a weir in order to prevent the zooplankton from rising towards the phytoplankton biomass and the contamination of the latter.

10. - Method according to any one of claims 1 to 9, **characterized in that** the ratio of the volume of water in the fry rearing (2) and growth (3) troughs to that of the three tanks of the lagooning system (5) is adjusted to a value at least equal to 6.

11. - Method according to any one of claims 1 to 10, **characterized in that** the temperature, the pH and the salinity of the medium, as well as the ammonia, nitrate and nitrite concentrations in the troughs (2,3) and in the tanks of the lagooning system (5) are monitored continuously and by selection.

12. - Method according to any one of claims 1 to 11, **characterized in that** the phytoplankton biomass is fertilized if the volume of the latter falls below the fixed limit, in order to accelerate its growth.

13. - Method according to any one of claims 1 to 12, **characterized in that** the concentration of the phytoplankton biomass is also monitored by counting the algal cells, by use of a Secchi disk or by measurement of the chlorophyll concentration of the medium.

14. - Use of the process according to any one of claims 1 to 13, **characterized in that** the fish introduced into the fry rearing (2) and growth (3) troughs are preferably tilapias in particular of the species Sarotherodon melanotheron heudelotii.

15. - Aquacultural farming installation for the implementation of the process according to any one of claims 1 to 13, **characterized in that** it comprises a plurality of fry rearing (2) and growth (3) troughs for the phytophagous fish, a lagooning system (5) constituted by at least two and preferably three tanks (6, 7, 8) connected in series for the controlled circulation of the liquid medium for farming, and at least one recycling pump (4) returning an adjusted fraction of this medium removed from at least one of the three tanks to the fry rearing and growth troughs.

16. - Installation according to claim 15, **characterized in that** the connections between the first tank (6) and the second tank (7), and the second tank (7) and the third tank (8), comprise a filter (10).

17. - Installation according to claim 15, **characterized in that** the connection between the second and the third tank comprises a weir.

18. - Installation according to claim 15, **characterized in that** the third tank (8) of the lagooning system (5) optionally comprises a filter (12) allowing the pumping of the liquid medium without removing the zooplankton in order to increase the biomass and a device (14) for removing the zooplankton in order to reduce the biomass, as appropriate.

## Patentansprüche

1. Verfahren zur Wasserzucht von phytophagen Fischen, deren Versorgung hinsichtlich tierischen Proteinen wenig anspruchsvoll ist, in einem flüssigen Medium, Meeresmedium oder einem von Brackwasser oder weichem Wasser gebildeten Medium in einem geschlossenen oder halb geschlossenen Kreis innerhalb von Behältern (2) zum Einsetzen von Fischbrut und dann Vermehren (3), bestehend in der Schaffung einer kontinuierlichen Nahrungskette mit völliger Wiedergewinnung der organischen Ausflüsse, die in diesen Behältern erzeugt werden, um sie in einer Reinigungseinheit (5) des flüssigen Mediums, das in kontinuierlicher Zirkulation gehalten wird, zu behandeln, umfassend eine Hauptschaltung, die von einem ersten Digerierbecken (6) mit aerober Funktion gebildet ist, das den vollständigen Abbau dieser Ausflüsse durch Wirkung einer Bakterienflora, die ihre Zerlegung in flüssige und mineralische Komponenten sicherstellt, durchführt, wobei der Ausgang dieses ersten Beckens vorzugsweise an ein zweites Pufferbecken (7) angeschlossen ist, das eine Biomasse aus Phytoplankton enthält, deren Population in kontinuierlichem Wachstum auf Grund der Aufnahme der Zerlegungskomponenten der Ausflüsse begriffen ist, und eine Nebenschaltung, umfassend ein drittes Becken (8), das eine Biomasse von Zooplankton enthält, **dadurch gekennzeichnet, dass** es darin besteht, das Wachstum zu kontrollieren, um das Volumen und die Dichte der Biomasse aus Phytoplankton in der Hauptschaltung im Wesentlichen konstant zu halten, wobei in das dritte Becken (8) in der Nebenschaltung der Überschuss dieser Biomasse in Bezug zu einer festgesetzten Grenze geleitet wird, wobei dieses dritte Becken mit dem zweien verbunden ist, und die Versorgung dieses dritten Beckens mit dem Phytoplankton der Hauptschaltung derart einzustellen, dass sein Verbrauch und seine Assimilation durch das Zooplankton aufrecht erhalten und kontrolliert werden, wobei der Überschuss desselben über eine ständig eingestellte Ausgleichsschwelle hinaus entnommen und wieder in die Behälter zum Einsetzen von Fischbrut und Vermehren geleitet wird, um eine Zusatznahrung für die in diesen Behältern vorhandenen Fische darzustellen.

2. Verfahren nach Anspruch 1, **dadurch gekennzeichnet, dass** der Überschuss der Biomasse aus Zooplankton entnommen wird, um ihn in die Behälter zum Einsetzen von Fischbrut (2) und Vermehren (3) kontinuierlich oder in getrennten Fraktionen zeitlich versetzt wieder einzuleiten.

3. Verfahren nach einem der Ansprüche 1 oder 2, **dadurch gekennzeichnet, dass** das in dem ersten Digerierbecken (6) und vorzugsweise auch in dem zweiten Pufferbecken (7) der Hauptschaltung enthaltene flüssige Medium einem ständigen Schütteln unterzogen wird, um die Dekantierung und Sedimentation der Ausflüsse während des bakteriellen Abbaus und des Phytoplanktons in Suspension zu vermeiden.

4. Verfahren nach Anspruch 3, **dadurch gekennzeichnet, dass** das ständige Schütteln durch Einführung von coprophagen Fischen in das Digerierbecken (6) und/oder das Pufferbecken (7) durchgeführt wird.

5. Verfahren nach Anspruch 4, **dadurch gekennzeichnet, dass** ein Filter (10) am Ausgang des ersten Beckens (6) und des zweiten Beckens (7) angeordnet wird, um jede Einleitung dieser coprophagen Fische in das dritte Becken (8) und jede Kolonisation der in diesem Becken enthaltenen Biomasse von Zooplankton durch diese zu vermeiden.

6. Verfahren nach Anspruch 3, **dadurch gekennzeichnet, dass** das ständige Schütteln durch eine Dispersion von Luftblasen vom Boden der Becken (6 und/oder 7) aus erfolgt.

7. Verfahren nach einem der Ansprüche 1 bis 6, **dadurch gekennzeichnet, dass** die Biomasse aus Phytoplankton in dem zweiten Becken (7) durch Einleitung und Auflösung von Luft zur Nachtzeit und durch natürliche Photosynthese zur Tageszeit oxydiert wird.

8. Verfahren nach einem der Ansprüche 1 bis 7, **dadurch gekennzeichnet, dass** das flüssige Medium in der Reinigungseinheit (5) und den Behältern zum Einsetzen von Fischbrut (2) und Vermehren (3) mit Hilfe mindestens einer Pumpe (4) rezykliert wird, wobei es aus einem oder mehreren der drei Becken getrennt oder gleichzeitig entnommen wird.

9. Verfahren nach einem der Ansprüche 1 bis 8, **dadurch gekennzeichnet, dass** die Verbindung zwischen dem zweiten (7) und dem dritten Becken (8) der Reinigungseinheit (5) mit Hilfe eines Überlaufrohrs eingerichtet wird, um das Zurückfließen des Zooplanktons zur Biomasse aus Phytoplankton und die Kontamination derselben zu vermeiden.

10. Verfahren nach einem der Ansprüche 1 bis 9, **dadurch gekennzeichnet, dass** das Verhältnis zwischen dem Wasservolumen in den Behältern zum Einsetzen von Fischbrut (2) und Vermehren (3) und jenem der drei Becken der Reinigungseinheit (5) auf einen Wert mindestens gleich 6 eingestellt wird.

11. Verfahren nach einem der Ansprüche 1 bis 10, **dadurch gekennzeichnet, dass** ständig und wahlweise in den Behältern (2, 3) und den Becken der Reinigungseinheit (5) die Temperatur, der pH-Wert und die Salzhaltigkeit des Mediums sowie die Konzentrationen an Ammoniak, Nitraten und Nitriten kontrolliert werden.

12. Verfahren nach einem der Ansprüche 1 bis 11, **dadurch gekennzeichnet, dass** die Biomasse aus Phytoplankton fertilisiert wird, wenn das Volumen derselben geringer als die festgesetzte Grenze wird, um ihr Wachstum zu beschleunigen.

13. Verfahren nach einem der Ansprüche 1 bis 12, **dadurch gekennzeichnet, dass** auch die Konzentration der Biomasse aus Phytoplankton durch Zählen der Algenzellen durch Verwendung einer Secchi-Scheibe oder durch Messen der Chlorophyllkonzentration des Mediums kontrolliert wird.

14. Anwendung des Verfahrens nach einem der Ansprüche 1 bis 13, **dadurch gekennzeichnet, dass** die in die Behälter zum Einsetzen von Fischbrut (2) und Vermehren (3) eingeleiteten Fische vorzugsweise Tilapias der Gattung Sarotherodon melanotheron heudelotii sind.

15. Anlage zur Wasserzucht für den Einsatz des Verfahrens nach einem der Ansprüche 1 bis 13, **dadurch gekennzeichnet, dass** sie eine Vielzahl von Behältern zum Einsetzen von Fischbrut (2) und Vermehren (3) der phytophagen Fische, eine Reinigungseinheit (5), die von mindestens zwei und vorzugsweise drei Becken (6, 7, 8) in Serie gebildet ist, die miteinander für die kontrollierte Zirkulation des flüssigen Zuchtmediums in Verbindung stehen, und mindestens eine Rezyklierumpe (4) umfasst, um einen entsprechenden Teil dieses aus mindestens einem der drei Becken entnommenen Mediums wieder in die Behälter zum Einsetzen von Fischbrut und vermehren zurückzuschicken.

16. Anlage nach Anspruch 15, **dadurch gekennzeichnet, dass** die Verbindungen zwischen dem ersten Becken (6) und dem zweiten Becken (7) und dem zweiten Becken (7) und dem dritten Becken (8) einen Filter (10) umfassen.

17. Anlage nach Anspruch 15, **dadurch gekennzeichnet, dass** die Verbindung zwischen dem zweiten und dem dritten Becken ein Überlaufrohr umfasst.

18. Anlage nach Anspruch 15, **dadurch gekennzeichnet, dass** das dritte Becken (8) der Reinigungseinheit (5) eventuell einen Filter (12), der das Pumpen des flüssigen Mediums ermöglicht, ohne das Zooplankton zu entnehmen, um die Biomasse zu vergrößern, und eine Entnahmevorrichtung (14) des Zooplanktons, um die Biomasse je nach Fall zu verringern, umfasst.
